# EUROPÄISCHE PATENTANMELDUNG

(11) **EP 3 026 230 A1**
(43) Veröffentlichungstag der Anmeldung: **01.06.2016**
(21) Anmeldenummer: 14194852.1
(22) Anmeldetag: 26.11.2014
(51) Int. Cl.: F01K 13/02, F01K 23/10

(54) **Verfahren zum Betreiben einer Turbineneinheit, Dampfkraftwerk oder kombiniertes Gas- und Dampfkraftwerk sowie Verwendung einer Drosseleinrichtung**

(71) Anmelder: Siemens Aktiengesellschaft, 80333 München (DE)
(72) Erfinder: Herberg, Rainer, 45478 Mülheim (DE)

(57) **Zusammenfassung**

Die Erfindung betrifft ein Verfahren zum Betreiben einer Turbineneinheit (2) umfassend wenigstens zwei Teilturbinen (3, 4, 8, 9), bei welchem ein Dampfvolumenstrom (7) mittels einer Dampfüberströmeinrichtung (5) von der stromauf angeordneten Teilturbine (3, 8) zu einer dieser stromauf angeordneten Teilturbine (3, 8) nachgeschalteten, stromab angeordneten Teilturbine (4, 9) geleitet wird, wobei ein Druckniveau innerhalb der Dampfüberströmeinrichtung (5) in Abhängigkeit von einem von der Turbineneinheit (2) gefahrenen Lastbereich derart manipuliert wird, dass der Abdampf (6) der stromauf angeordneten Teilturbine (3, 8) bei einem Betrieb der Turbineneinheit (2) in einem Teillastbereich unterhalb des IGV-Punktes und/oder bei einer raschen Erhöhung der Teillast überhitzt bleibt.

## Beschreibung

Die Erfindung betrifft ein Verfahren zum Betreiben einer Turbineneinheit umfassend wenigstens zwei Teilturbinen, bei welchem ein Dampfvolumenstrom mittels einer Dampfüberströmeinrichtung von der stromauf angeordneten Teilturbine zu einer dieser stromauf angeordneten Teilturbine nachgeschalteten, stromab angeordneten Teilturbine geleitet wird.

Die Erfindung betrifft ferner ein Dampfkraftwerk oder ein kombiniertes Gas- und Dampfkraftwerk mit einer Turbineneinheit umfassend wenigstens zwei Teilturbinen, welche mittels einer gemeinsamen Dampfüberströmeinrichtung miteinander wirkverbunden sind.

Die Erfindung betrifft außerdem eine Verwendung einer an einer zwischen zwei Teilturbinen angeordneten Dampfüberströmeinrichtung vorgesehenen Drosseleinrichtung.

Gattungsgemäße Verfahren, Turbineneinheiten sowie Dampfkraftwerke oder kombinierte Gas- und Dampfkraftwerke sind aus dem Stand der Technik bereits bekannt.

Insbesondere kombinierte Gas- und Dampfkraftwerke werden idealerweise überwiegend im Volllastbereich betrieben, da hierdurch unter anderem der bestmöglichste Wirkungsgrad erzielt werden kann.

Um auf die sich geänderten Marktanforderungen hinsichtlich einer immer flexibler gestalteten Bereitstellung von elektrischer Energie besser reagieren zu können, ist zunehmend auch ein flexiblerer Betrieb insbesondere solcher kombinierten Gas- und Dampfkraftwerke gefordert, wobei deren Teilturbinen für eine geringere Energieerzeugung zumindest teilweise häufiger in tieferen Teillastbereichen gefahren werden sollen, aber bei kurzfristiger Anforderung von elektrischer Energie rasch wieder die volle Leistungsabgabe erbringen können.

Speziell in einem statischen Betriebszustand können insbesondere kombinierte Gas- und Dampfkraftwerke bis auf etwa 60% ihrer möglichen Volllast herunterfahren, ohne dass sich die Abdampftemperatur einer der Teilturbinen und damit auch die Dampfeintrittstemperatur einer nachgeschalteten weiteren Teilturbine kritisch ändern, oder zumindest nur in einem zu vernachlässigendem Maß. Dies verhält sich jedoch unterhalb des sogenannten IGV-Punktes, also bei einer bestimmten Stellung von Leitschaufeln an dem Verdichtereinlass, anders, da sich unterhalb dieses IGV-Punktes die Abdampf- und/oder Dampfeintrittstemperaturen in einem unerwünschten Maße ändern können.

Neben einer durch die Temperaturwechsel bedingten Ermüdung von Bauteilen der Turbinen kann dies bei einigen Turbinenkonfigurationen noch dazu führen, dass es zu einer unzulässigen Expansion bis in das Nassdampfgebiet hinein kommt. Aufgrund des Nassdampfes bzw. einer diesbezüglichen kritischen Nassdampfbildung besteht dann die Gefahr eines erhöhten Wärmeübergangs, welcher wiederum ein radiales bzw. axiales Anstreifen einer Turbinenbeschaufelung zur Folge haben kann.

Es versteht sich, dass speziell die vorgenannten Umstände die Flexibilität des Betriebs insbesondere von kombinierten Gas- und Dampfkraftwerken erheblich einschränkt.

Darüber hinaus ergibt sich speziell hinsichtlich eines Betriebszustände noch das Problem, dass es bei einer zu raschen Anhebung der Last aus der Teillast heraus zu einem kritischen Temperatursprung innerhalb der Turbine kommen kann, wodurch die Lebensdauer nachteilig beeinträchtigt werden kann. Theoretisch bestünde zwar die Möglichkeit der Abspritzung des Abhitzekessels, um die Turbinentemperatur bei einer Lastanhebung zu aktivieren, so dass hierdurch zumindest ein kritischer Temperatursprung begrenzt werden kann. Jedoch ist speziell durch die Lastaufnahme eine unzulässige und damit kritische Expansion in das Nassdampfgebiet zu erwarten. Dies ist jedoch aus den vorstehend genannten Gründen zwingend zu vermeiden.

Es ist Aufgabe der Erfindung, gattungsgemäße Verfahren und diesbezügliche Dampfkraftwerke oder im Speziellen kombinierte Gas- und Dampfkraftwerke derart weiterzuentwickeln, dass diese mit einem geringen verfahrenstechnischen und konstruktiven Aufwand an die gestiegenen Anforderungen hinsichtlich einer flexibler gestalteten Bereitstellung von elektrischer Energie angepasst werden können.

Die Aufgabe wird von einem Verfahren zum Betreiben einer Turbineneinheit umfassend wenigstens zwei Teilturbinen gelöst, bei welchem ein Dampfvolumenstrom mittels einer Dampfüberströmeinrichtung von der stromauf angeordneten Teilturbine zu einer stromab angeordneten Teilturbine geleitet wird, wobei ein Druckniveau innerhalb der Dampfüberströmeinrichtung in Abhängigkeit von einem von der Turbineneinheit gefahrenen Lastbereich derart manipuliert wird, dass der Abdampf der stromauf angeordneten Teilturbine bei einem Betrieb der Turbineneinheit in einem Teillastbereich unterhalb des IGV-Punktes und/oder bei einer raschen Erhöhung der Teillast überhitzt bleibt.

Hierdurch kann die Turbineneinheit betriebssicher bis in tiefere Teillastbereiche hinein betrieben werden und/oder schnell an einen signifikant erhöhten Leistungs- bzw. Energiebedarf angepasst werden, ohne dass hierbei die Gefahr besteht, dass der Abdampf insbesondere der stromauf angeordneten Teilturbine kritisch bis in das Nassdampfgebiet hinein expandiert.

Insofern können die Turbineneinheit bzw. deren Teilturbinen betriebssicher außerhalb des kritischen Nassdampfgebietes betrieben werden.

Insbesondere wird in diesem Zusammenhang die Expansion des Dampfes bezüglich der stromauf angeordneten Teilturbine verkürzt, so dass der diesbezügliche Abdampf länger bzw. weiterhin überhitzt bleibt, und somit auch die Gefahr einer kritischen Nassdampfbildung an unerwünschter Stelle der Turbineneinheit vermieden werden kann.

Hierbei wird das innerhalb der Dampfüberströmeinrichtung vorherrschende Druckniveau des Abdampfs der stromauf angeordneten Teilturbine in einem entsprechenden Maß angehoben.

Die Ausdrücke "vorzeitige bzw. kritische Expansion" bzw. "kritische Nassdampfbildung" bezeichnen im Sinne der Erfindung insbesondere eine Nassdampfbildung außerhalb von erwünschten Bereichen der Teilturbine, wie etwa einem Niederdruckteil.

Die Begrifflichkeit "tiefere Teillastbereiche" beschreibt im Sinne der vorliegenden Erfindung Teillastbereiche unterhalb des IGV-Punktes der Gasturbine.

Der Begriff "IGV-Punkt" bezeichnet im Sinne der Erfindung eine bestimmte Stellung der Leitschaufeln an dem Verdichtereinlass der Gasturbine, wobei diese bestimmte Stellung zu einem geringen Brennstoffverbrauch und einem geringen Schadstoffausstoß führt.

Die Begrifflichkeit "rasche Erhöhung" beschreibt eine sofortige Erhöhung der Turbineneinheitsleistung der Gasturbine beispielsweise um mehr als 1% pro Minute.

Somit können die Turbineneinheiten problemlos in unteren Teillastbereichen betrieben werden, ohne die Gefahr, dass der Abdampf in einem unerwünschten Bereich der Turbineneinheit bereits in das Nassdampfgebiet hinein expandiert.

Darüber hinaus können die in diesen unteren Teillastbereichen betriebenen Turbineneinheiten schneller wieder bis etwa in den Volllastbereich hochgefahren werden, ohne die Gefahr, dass der Abdampf in einem unerwünschten Bereich der Turbineneinheit bereits in das Nassdampfgebiet hinein expandiert.

Insofern ist es auch vorteilhaft, wenn der Abdampf der stromauf angeordneten Teilturbine bei einem Betrieb der Turbineneinheit in einem Teillastbereich unterhalb von ca. 60% der erzielbaren Volllast überhitzt bleibt.

Die vorliegende Turbineneinheit kann unterschiedlichste Turbinenarten, wie etwa Gasturbinen, Dampfturbinen bzw. Hochdruck-, Mitteldruck-, und/oder Niederdruckdampfturbinen bzw. Heißdampf-, Nassdampfturbinen oder dergleichen umfassen.

Der Begriff "Dampfüberströmeinrichtung" beschreibt im Sinne der Erfindung jegliche Einrichtung, mittels welcher ein überhitzter Abdampf einer ersten der Teilturbinen zu einer weiteren der Teilturbinen überströmen kann. Derartige Einrichtungen können zum Beispiel als eine Überströmleitung bzw. ein Überströmrohr oder dergleichen ausgestaltet sein.

Eine bevorzugte Verfahrensvariante sieht vor, dass das Druckniveau innerhalb der Dampfüberströmeinrichtung derart manipuliert wird, dass eine vorzeitige Expansion des von der stromauf angeordneten Teilturbine kommenden Abdampfs in das Nassdampfgebiet hinein vermieden wird. Hierdurch kann die Turbineneinheit bzw. deren Teilturbinen länger außerhalb des kritischen Nassdampfgebietes betrieben werden, wodurch erzielt wird, dass der Abdampf möglichst nur in hierfür vorgesehene Bereiche in das Nassdampfgebiet expandieren kann.

Ferner ist es vorteilhaft, wenn der aus der stromauf angeordneten Teilturbine austretende Abdampf bis in einen Niederdruckteil hinein überhitzt gehalten wird, so dass eine kritische Expansion des Abdampfs der stromauf angeordneten Teilturbine in das Nassdampfgebiet hinein möglichst lange vermieden wird. Auch hierdurch kann die Turbineneinheit bzw. deren Teilturbinen länger außerhalb des kritischen Nassdampfgebietes betrieben werden.

Insofern ist es vorteilhaft, wenn in Abhängigkeit von einem von der Turbineneinheit gefahrenen Lastbereich der Dampfstromvolumen in einer Dampfüberströmeinrichtung gedrosselt wird, um eine kritische Nassdampfbildung zu vermeiden.

Insbesondere die im Sinne der Erfindung durchgeführte Manipulation des Druckniveaus kann konstruktiv einfach vorgenommen werden, wenn das Druckniveau mittels eines innerhalb der Dampfüberströmeinrichtung angeordneten Stellorgans manipuliert wird. Ein derartiges Stellorgan kann unterschiedlichst konstruiert sein, wie später noch erläutert ist.

Die Aufgabe der Erfindung wird einerseits auch von einem Dampfkraftwerk oder einem kombinierten Gas- und Dampfkraftwerk mit einer Turbineneinheit umfassend wenigstens zwei Teilturbinen gelöst, welche mittels einer gemeinsamen Dampfüberströmeinrichtung miteinander wirkverbunden sind, wobei das Dampfkraftwerk oder das kombinierte Gas- und Dampfkraftwerk Steuerungs- und/oder Regulierungsmittel zum Steuern und/oder Regulieren eines Druckniveaus und/oder Dampfvolumenstroms innerhalb der gemeinsamen Dampfüberströmeinrichtung aufweist, um ein Nassdampfverhalten zu beeinflussen.

Diese an der gemeinsamen Dampfüberströmeinrichtung eingesetzten Steuerungs- und/oder Regulierungsmittel werden erfindungsgemäß zur Vermeidung von kritischem Nassdampf in allen Teillastbereichen genutzt, wodurch die vorstehend bereits ausführlich beschriebenen Effekte erzielt werden können.

Die Aufgabe der Erfindung wird andererseits auch von einem Dampfkraftwerk oder einem kombinierten Gas- und Dampfkraftwerk mit einer Turbineneinheit umfassend wenigstens zwei Teilturbinen gelöst, welche mittels einer gemeinsamen Dampfüberströmeinrichtung miteinander wirkverbunden sind, wobei das Dampfkraftwerk oder das kombinierte Gas- und Dampfkraftwerk Mittel zum Vermeiden einer kritischen Nassdampfbildung umfasst, und wobei die Mittel zum Vermeiden der kritischen Nassdampfbildung zumindest teilweise innerhalb der Dampfüberströmeinrichtung angeordnet sind.

Diese innerhalb der gemeinsamen Dampfüberströmeinrichtung eingesetzten Mittel zum Vermeiden der kritischen Nassdampfbildung werden erfindungsgemäß zur Vermeidung von unerwünschtem Nassdampf in allen Teillastbereichen genutzt, wodurch ebenfalls die vorstehend bereits ausführlich beschriebenen Effekte erzielt werden können.

Mittels der erfindungsgemäßen Dampfkraftwerke bzw. der kombinierten Gas- und Dampfkraftwerke kann insbesondere auch das vorstehend genannte erfindungsgemäße Verfahren vorteilhaft durchgeführt werden.

Sind die Steuerungs- und/oder Regulierungsmittel zum Steuern und/oder Regulieren eines Druckniveaus oder eines Dampfvolumenstroms oder Mittel zum Vermeiden einer kritischen Nassdampfbildung in Abhängigkeit von einem von der Turbineneinheit betriebenen Lastbereich betätigbar, kann eine unerwünschte Nassdampfbildung besonders betriebssicher vermieden werden.

Eine weitere vorteilhafte Ausführungsvariante sieht vor, dass das Dampfkraftwerk oder das kombinierte Gas- und Dampfkraftwerk Mittel zum Abkühlen oder Erhitzen eines Abhitzekessels der Turbineneinheit umfasst, mittels welchen der Abhitzekessel in Abhängigkeit von einem von der Turbineneinheit betriebenen Lastbereich kühlbar oder erhitzbar ist. Hierdurch eignet sich insbesondere das erfindungsgemäße Verfahren auch für transiente Betriebszustände, da durch eine geeignete Abspritzung des Abhitzekessels die Temperatur an der nachgeschalteten, stromab angeordneten Teilturbine niedrig gehalten werden kann bzw. nur einen geringeren Temperaturgradienten zu lässt, während die Steuerungs- und/oder Regulierungsmittel bzw. die Mittel zum Vermeiden einer kritischen Nassdampfbildung eine ausreichende Überhitzung des Abdampfes der stromauf angeordneten Teilturbine gewährleisten.

Weist das Dampfkraftwerk oder das kombinierte Gas- und Dampfkraftwerk eine Prozesseinrichtung auf, mittels welcher die Steuerungs- und/oder Regulierungsmittel oder Mittel zum Vermeiden der kritischen Nassdampfbildung, und Mittel zum Abkühlen oder Erhitzen eines Abhitzekessel der Turbineneinheit koordiniert zueinander betätigbar und betreibbar sind, kann die Turbineneinheit insgesamt derart koordiniert betrieben werden, um die vorstehend beschrieben Effekte betriebssicher erzielen zu können.

Es versteht sich, dass die vorstehend erwähnten Steuerungs- und/oder Regulierungsmittel bzw. die Mittel zum Vermeiden der kritischen Nassdampfbildung konstruktiv unterschiedlich realisiert sein können.

Baulich besonders simpel können diese in eine Turbineneinheit integriert werden, wenn die Steuerungs- und/oder Regulierungsmittel oder Mittel zum Vermeiden der kritischen Nassdampfbildung ein Drosselklappenteil oder ein Drosselventilteil einer Drosseleinrichtung aufweisen.

Die Aufgabe der Erfindung wird auch von einer Verwendung einer an einer zwischen zwei Teilturbinen angeordneten Dampfüberströmeinrichtung vorgesehenen Drosseleinrichtung zum Vermeiden oder zumindest zum Eindämmen einer kritischen Nassdampfbildung gelöst.

Insbesondere bei transienten Betriebsbedingungen kann die Drosseleinrichtung erfindungsgemäß dazu verwendet werden, um eine kritische Nassdampfbildung zumindest teilweise oder idealerweise zur Gänze zu vermeiden.

Sollte das erfindungsgemäße Verfahren an einer Turbineneinheit durchgeführt werden, welche bereits eine Drosseleinrichtung an der Dampfüberströmeinrichtung, welche dazu geeignet erscheint, im Sinne der vorliegenden Erfindung eingesetzt werden zu können, kann diese Turbineneinheit entsprechend einfach modifiziert werden, um das Druckniveau innerhalb der Dampfüberströmeinrichtung insbesondere in Abhängigkeit von einem von der Turbineneinheit betriebenen Lastbereich zu manipulieren.

Insbesondere ist vorliegend die Verwendung einer solchen Drosseleinrichtung zum Vermeiden von kritischem Nassdampf vorteilhaft.

Vorliegend kann speziell durch die vorliegende Turbineneinheit das Druckniveau innerhalb der Dampfüberströmeinrichtung in Abhängigkeit von einem von der Turbineneinheit gefahrenen Lastbereich bzw. in Abhängigkeit von der vorstehend erläuterten Steuerungs- und/oder Regulierungsmittel oder Mittel zum Vermeiden einer kritischen Nassdampfbildung manipuliert werden.

Hierdurch kann die Gefahr besonders zuverlässig reduziert werden, dass der von der stromauf angeordneten Teilturbine kommende Abdampf zu früh in das Nassdampfgebiet expandiert, wenn die Turbineneinheit insbesondere unterhalb eines Lastbereichs unterhalb des IGV-Punktes betrieben wird und/oder eine gefahrene Last aus einem unteren Lastbereich heraus rasch erhöht wird.

Mittels der vorliegenden Erfindung gelingt es somit, betriebssicher tiefere Teillasten zu erreichen bzw. den Lebensdauerverbrauch von Teilturbinen einer Turbineneinheit insbesondere bei transienten Vorgängen signifikant zu reduzieren.

Jedenfalls kann mittels der vorliegenden Erfindung eine Nassdampfbildung örtlich verlagert werden, und zwar in den Niederdruckteil hinein, in welchem eine Nassdampfbildung unkritisch ist.

Es versteht sich, dass die Merkmale der vorstehend bzw. in den Ansprüchen beschriebenen Lösungen gegebenenfalls auch kombiniert werden können, um die Vorteile entsprechend kumuliert umsetzen zu können.

Weitere Merkmale, Effekte und Vorteile vorliegender Erfindung werden anhand anliegender Zeichnung und nachfolgender Beschreibung erläutert, in welchen beispielhaft teilweise eine Turbineneinheit eines erfindungsgemäß ausgerüsteten kombinierten Gas- und Dampfkraftwerks dargestellt und beschrieben ist.

In der Zeichnung zeigen:

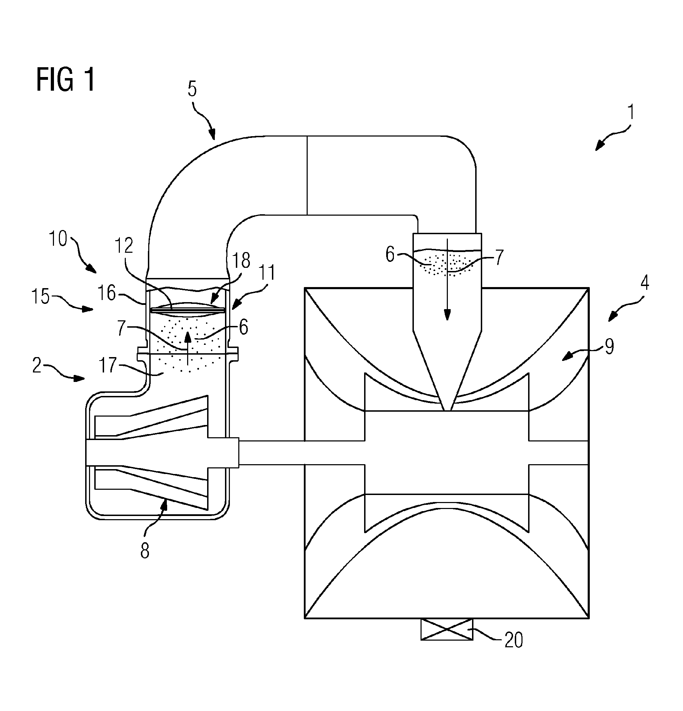

- Figur 1: schematisch eine Teilansicht einer an einem kombinierten Gas- und Dampfkraftwerk vorgesehenen Turbineneinheit mit zwei mittels einer Dampfüberströmeinrichtung miteinander wirkverbundenen Teilturbinen, wobei ein Druckniveau innerhalb der Dampfüberströmeinrichtung in Abhängigkeit von einem von der Turbineneinheit gefahrenen Lastbereich derart manipuliert wird, dass der Abdampf der stromauf angeordneten Teilturbine bei einem Betrieb der Turbineneinheit in einem Teillastbereich unterhalb des IGV Punktes und/oder bei einer raschen Erhöhung der Teillast überhitzt bleibt; und

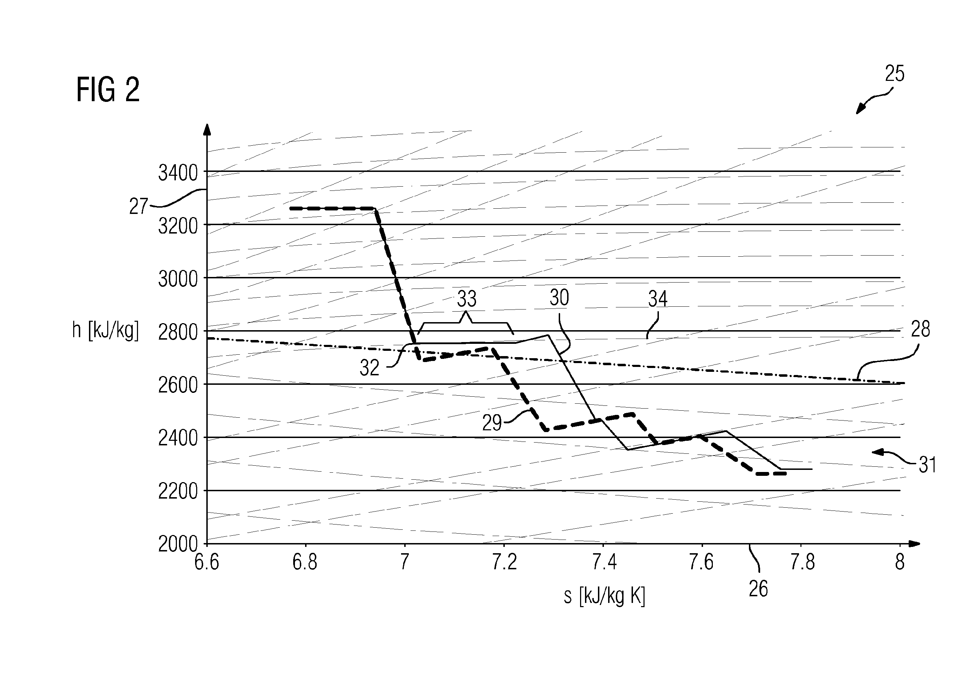

- Figur 2: schematisch ein h-s-Diagramm des in der Figur 1 gezeigten kombinierten Gas- und Dampfkraftwerks.

Das in der Figur 1 gezeigte kombinierte Gas- und Dampfkraftwerk 1 weist eine Turbineneinheit 2 auf, von welcher gemäß der Darstellung der Figur 1 lediglich zwei Teilturbinen 3 und 4 gezeigt sind.

Diese zwei Teilturbinen 3 und 4 sind mittels einer gemeinsamen Dampfüberströmeinrichtung 5 derart miteinander wirkverbunden, dass ein von der stromauf angeordneten Teilturbine 3 kommender Abdampf 6 als ein Dampfvolumenstrom 7 zu der weiter stromab angeordneten Teilturbine 4 geleitet wird, so dass Letztere mittels des Abdampfes 6 der stromauf angeordneten Teilturbine 3 betrieben wird.

In diesem speziell in der Figur 1 gezeigten Ausführungsbeispiel ist die erste Teilturbine 3, also die stromauf angeordnete Teilturbine 3, eine Mitteldruckdampfturbine 8 und die zweite Teilturbine 4, also die weiter stromab angeordneten Teilturbine 4, eine Niederdruckdampfturbine 9.

Erfindungsgemäß zeichnet sich das kombinierte Gas- und Dampfkraftwerk 1 durch eine Turbineneinheit 2 aus, welche Steuerungs- und/oder Regulierungsmittel 10 zum Steuern und/oder Regulieren eines Druckniveaus und/oder eines Dampfvolumenstroms 7 innerhalb der Dampfüberströmeinrichtung 5 aufweist, um ein Nassdampfverhalten zu beeinflussen, wobei diese Steuerungs- und/oder Regulierungsmittel 10 in diesem Ausführungsbeispiel konstruktiv einfach eine an der gemeinsamen Dampfüberströmeinrichtung 5 vorgesehene Drosseleinrichtung 11 umfassen, deren Drosselklappenteil 12 innerhalb der gemeinsamen Dampfüberströmeinrichtung 5 angeordnet ist.

Mittels dieser einfach aufgebauten Steuerungs- und/oder Regulierungsmittel 10 gelingt es an der vorliegenden Turbineneinheit 2 bzw. an dem kombinierten Gas- und Dampfkraftwerk 1 bedarfsweise eine Druckerhöhung bezüglich des Abdampfes 6 zu erzielen, insbesondere wenn die Turbineneinheit 2 in tieferen Teillastbereichen unterhalb des IGV-Punktes betrieben wird, wodurch stets sichergestellt wird, dass dieser Abdampf 6 immer möglichst lange überhitzt bleibt.

Gleiches gilt auch bei einer raschen Erhöhung der Teillast, insbesondere aus derartigen tieferen Teillastbereichen heraus, wobei hierbei zum Reduzieren der Temperatur an der nachgeschalteten, stromab angeordneten Teilturbine 4 ein hier nicht näher gezeigter Abhitzekessel durch hier nicht weiter gezeigte Mittel zum Abkühlen oder Erhitzen des Abhitzekessels der Turbineneinheit 2 gekühlt werden kann.

Insofern verkörpert diese Drosseleinrichtung 11 mit ihrem in der gemeinsamen Dampfüberströmeinrichtung 5 angeordneten Drosselklappenteil 12 auch Mittel 15 zum Vermeiden einer Nassdampfbildung innerhalb der gemeinsamen Dampfüberströmeinrichtung 5, um die vorstehend beschriebenen Effekte zu erzielen.

Die Drosseleinrichtung 11 bzw. deren Drosselklappenteil 12 sind hierbei in einem Auslassstutzenteil 16 der gemeinsamen Dampfüberströmeinrichtung 5 angeordnet, so dass insbesondere das Drosselklappenteil 12 unmittelbar hinter einem Abdampfauslass 17 der stromauf angeordneten Teilturbine 3 platziert ist.

Somit verkörpert vorliegend allein schon das Drosselklappenteil 12 ein Stellorgan 18, mittels welchem das Druckniveau innerhalb der gemeinsamen Dampfüberströmeinrichtung 5 im Sinne der vorliegenden Erfindung manipuliert werden kann.

Um die Steuerungs- und/oder Regulierungsmittel 10 bzw. die Mittel 15 zum Vermeiden der Nassdampfbildung, und die Mittel zum Abkühlen oder Erhitzen des Abhitzekessels der Turbineneinheit 2 untereinander koordiniert einsetzten zu können, weist die Turbineneinheit 2 noch eine entsprechend ausgestaltete Prozesseinrichtung 20 auf, welche derart ausgestaltet ist, dass die hier beschriebene Turbineneinheit 2 im Sinne der Erfindung betrieben werden kann. Diese Prozesseinrichtung 20 kann hierbei sowohl als Hardware als auch als Software realisiert sein.

Bei dem in der Figur 2 gezeigten h-s-Diagramm 25 der in der Figur 1 zumindest teilweise gezeigten Turbineneinheit 2 des kombinierten Gas- und Dampfkraftwerks 1 sind an der Abszisse 26 die Entropie-Werte und an der Ordinate 27 die Enthalpie-Werte abgetragen, wobei in diesem h-s-Diagramm 25 gut ersichtlich die Sättigungskurve 28 illustriert ist.

Darüber hinaus erkennt man in diesem h-s-Diagramm 25 eine herkömmliche Expansionskurve 29 bezüglich eines Expansionsverhaltens des Abdampfes 6 innerhalb der gemeinsamen Dampfüberströmeinrichtung 5 ohne den Einsatz der vorliegenden Steuerungs- und/oder Regulierungsmittel 10 bzw. der Mittel 15 zum Vermeiden der Nassdampfbildung bei einem Betrieb der Turbineneinheit 2 in einem tiefen Teillastbetrieb unterhalb des IGV-Punktes der Turbineneinheit 2.

Oberhalb dieser herkömmlichen Expansionskurve 29 ist beispielhaft eine neue Expansionskurve 30 eines Expansionsverhaltens des Abdampfes 6 innerhalb der gemeinsamen Dampfüberströmeinrichtung 5 unter Zuhilfenahme der vorliegenden Steuerungs- und/oder Regulierungsmittel 10 bzw. der Mittel 15 zum Vermeiden der Nassdampfbildung bei einem Betrieb der Turbineneinheit 2 in einem tiefen Teillastbetrieb unterhalb des IGV-Punktes der Turbineneinheit 2 eingezeichnet.

Es ist deutlich zu erkennen, dass die Turbineneinheit 2 mit dem erfindungsgemäß vorgeschlagenen Verfahren deutlich länger außerhalb des Nassdampfgebietes 31 betrieben werden kann. Das heißt mit anderen Worten, dass die Nassdampfbildung örtlich dort stattfindet, wo es gewünscht ist, nämlich im Bereich eines Niederdruckteils.

Während die herkömmliche Expansionskurve 29 gemäß der Darstellung nach der Figur 2 im Bereich des Punktes 32 weiter in Richtung des Nassdampfgebietes 31 läuft, gelingt es durch den Einsatz der vorliegenden Steuerungs- und/oder Regulierungsmittel 10 bzw. der Mittel 15 zum Vermeiden der Nassdampfbildung zumindest temporär, dass die neue Expansionskurve 30 ab diesem Punkt 32 für eine Strecke 33 im Sinne einer isothermen Zustandsänderung vorerst im Wesentlichen entlang einer Isothermen 34 verläuft, wodurch die Expansion des Abdampfes 6 länger oberhalb der Sättigungskurve 28 erfolgen kann, bevor die neue Expansionskurve 30 in ihrem weiteren Verlauf wieder ähnlich der herkömmlichen Expansionskurve 29 verläuft.

An dieser Stelle sei explizit darauf hingewiesen, dass die Merkmale der vorstehend bzw. in den Ansprüchen beschriebenen Lösungen gegebenenfalls auch kombiniert werden können, um die erläuterten Merkmale, Effekte und Vorteile entsprechend kumuliert umsetzen bzw. erzielen zu können.

Obwohl die Erfindung im Detail durch das bevorzugte Ausführungsbeispiel näher illustriert und beschrieben wurde, so ist die Erfindung nicht durch dieses offenbarte Ausführungsbeispiel eingeschränkt, und andere Variationen können vom Fachmann hieraus abgeleitet werden, ohne den Schutzumfang der Erfindung zu verlassen.

## Patentansprüche

1. Verfahren zum Betreiben einer Turbineneinheit (2) umfassend wenigstens zwei Teilturbinen (3, 4, 8, 9),
bei welchem ein Dampfvolumenstrom (7) mittels einer Dampfüberströmeinrichtung (5) von der stromauf angeordneten Teilturbine (3, 8) zu einer dieser stromauf angeordneten Teilturbine (3, 8) nachgeschalteten, stromab angeordneten Teilturbine (4, 9) geleitet wird,
wobei ein Druckniveau innerhalb der Dampfüberströmeinrichtung (5) in Abhängigkeit von einem von der Turbineneinheit (2) gefahrenen Lastbereich derart manipuliert wird, dass der Abdampf (6) der stromauf angeordneten Teilturbine (3, 8) bei einem Betrieb der Turbineneinheit (2) in einem Teillastbereich unterhalb des IGV-Punktes und/oder bei einer raschen Erhöhung der Teillast überhitzt bleibt.

2. Verfahren nach Anspruch 1,
wobei das Druckniveau innerhalb der Dampfüberströmeinrichtung (5) derart manipuliert wird, dass eine vorzeitige Expansion des von der stromauf angeordneten Teilturbine (3, 7) kommenden Abdampfs (6) in das Nassdampfgebiet (31) hinein vermieden wird.

3. Verfahren nach Anspruch 1 oder 2,
wobei in Abhängigkeit von einem von der Turbineneinheit (2) betriebenen Lastbereich der Dampfstromvolumen (7) in einer Dampfüberströmeinrichtung (5) gedrosselt wird, um eine kritische Nassdampfbildung zu vermeiden.

4. Verfahren nach einem der Ansprüche 1 bis 3,
wobei das Druckniveau mittels eines innerhalb der Dampfüberströmeinrichtung (5) angeordneten Stellorgans (18) manipuliert wird.

5. Dampfkraftwerk oder kombiniertes Gas- und Dampfkraftwerk (1) mit einer Turbineneinheit (2) umfassend wenigstens zwei Teilturbinen (3, 4, 8, 9),
welche mittels einer gemeinsamen Dampfüberströmeinrichtung (5) miteinander wirkverbunden sind, insbesondere zum Durchführen des vorstehend genannten Verfahrens,
wobei das Dampfkraftwerk oder das kombinierte Gas- und Dampfkraftwerk (1) Steuerungs- und/oder Regulierungsmittel (10) zum Steuern und/oder Regulieren eines Druckniveaus und/oder Dampfvolumenstroms (7) innerhalb der gemeinsamen Dampfüberströmeinrichtung (5) aufweist, um ein Nassdampfverhalten zu beeinflussen.

6. Dampfkraftwerk oder kombiniertes Gas- und Dampfkraftwerk (1) mit einer Turbineneinheit (2) umfassend wenigstens zwei Teilturbinen (3, 4, 8, 9),
welche mittels einer gemeinsamen Dampfüberströmeinrichtung (5) miteinander wirkverbunden sind, insbesondere zum Durchführen des vorstehend genannten Verfahrens,
wobei das Dampfkraftwerk oder das kombinierte Gas- und Dampfkraftwerk (1) Mittel (15) zum Vermeiden einer kritischen Nassdampfbildung innerhalb der gemeinsamen Dampfüberströmeinrichtung (5) umfasst, und
wobei die Mittel (15) zum Vermeiden der kritischen Nassdampfbildung zumindest teilweise innerhalb der gemeinsamen Dampfüberströmeinrichtung (5) angeordnet sind.

7. Dampfkraftwerk oder kombiniertes Gas- und Dampfkraftwerk (1) nach Anspruch 5 oder 6,
wobei Steuerungs- und/oder Regulierungsmittel (10) zum Steuern und/oder Regulieren eines Druckniveaus oder eines Dampfvolumenstroms (7) oder Mittel (15) zum Vermeiden einer kritischen Nassdampfbildung in Abhängigkeit von einem von der Turbineneinheit (2) betriebenen Lastbereich betätigbar sind.

8. Dampfkraftwerk oder kombiniertes Gas- und Dampfkraftwerk (1) nach einem der Ansprüche 5 bis 7,
wobei das Dampfkraftwerk oder das kombinierte Gas- und Dampfkraftwerk (1) Mittel zum Abkühlen oder Erhitzen eines Abhitzekessels der Turbineneinheit (2) umfasst, mittels welchen der Abhitzekessel in Abhängigkeit von einem von der Turbineneinheit (2) betriebenen Lastbereich kühlbar oder erhitzbar ist.

9. Dampfkraftwerk oder kombiniertes Gas- und Dampfkraftwerk (1) nach einem der Ansprüche 5 bis 8,
wobei das Dampfkraftwerk oder das kombinierte Gas- und Dampfkraftwerk (1) eine Prozesseinrichtung (16) aufweist, mittels welcher die Steuerungs- und/oder Regulierungsmittel (10) oder Mittel (15) zum Vermeiden der kritischen Nassdampfbildung, und
Mittel zum Abkühlen oder Erhitzen eines Abhitzekessels der Turbineneinheit (2) koordiniert zueinander betätigbar und betreibbar sind.

10. Dampfkraftwerk oder kombiniertes Gas- und Dampfkraftwerk (1) nach einem der Ansprüche 5 bis 9,
die Steuerungs- und/oder Regulierungsmittel (10) oder Mittel (15) zum Vermeiden einer kritischen Nassdampfbildung ein Drosselklappenteil (12) oder ein Drosselventilteil einer Drosseleinrichtung (11) aufweisen.

11. Verwendung einer an einer zwischen zwei Teilturbinen (3, 4, 8, 9) angeordneten Dampfüberströmeinrichtung (5) vorgesehenen Drosseleinrichtung (10) zum Vermeiden oder zumindest zum Eindämmen einer kritischen Nassdampfbildung.
